# EUROPEAN PATENT APPLICATION

(11) **EP 2 837 781 A1**
(43) Date of publication of application: **18.02.2015**
(21) Application number: 13775626.8
(22) Date of filing: 21.03.2013
(51) Int. Cl.: F01M 13/04, B01D 45/08, B01D 45/12, B04C 5/103

(54) **CYCLONE OIL SEPARATION DEVICE**

(30) Priority: 09.04.2012 JP 2012088603
(71) Applicant: Aisin Seiki Kabushiki Kaisha, Kariya-shi, Aichi 448-8650 (JP)
(72) Inventor: KIRA, Naoki, Kariya-shi, Aichi 448-8650 (JP); NISHIGAKI, Atsushi, Kariya-shi, Aichi 448-8650 (JP)
(74) Representative: Kramer Barske Schmidtchen Patentanwälte PartG mbB
(86) International application number: PCT/JP2013/058085
(87) International publication number: WO 2013/153930

(57) **Abstract**

A cyclone type oil separation device is provided to suppress rescattering of oil that has been once captured from blow-by gas while achieving reduction in cost for an oil adsorption layer. The device is provided with a main body, a gas introduction part mounted on a side wall of the main body for introducing oil-mixed gas into an interior of the main body, a gas discharge part mounted on an upper wall of the main body for discharging gas of the oil-mixed gas from which oil is separated to the outside of the main body, an oil catcher provided in an inner surface of the main body, and a space defined between the oil catcher and the inner surface, through which the captured oil flows down.

## Description

### TECHNICAL FILED

The present invention relates to a cyclone type oil separation device for separating and removing oil from gas such as blow-by gas that contains the oil therein for a vehicle engine.

### BACKGROUND ART

It has been a conventional technique that blow-by gas generated in the vehicle engine or the like is returned to an intake system of the engine for reuse. The blow-by gas usually contains oil mist resulting from granulation of lubricating oil such as engine oil. Therefore, the blow-by gas is guided to an oil separation device in the first place to allow the oil mist to be separated and collected, and then returned to the intake system of the engine (see Patent Literature 1, for example). In a cyclone type oil separation device according to Patent Literature 1, fiber fabric is provided in an inner surface of a main body for adsorbing and separating oil.

### CITATION LIST

### PATENT LITERATURE

Patent Literature 1: Published Japanese Translation of PCT International Publication for Patent Application No. 2009-539014

### SUMMARY OF INVENTION

### TECHNICAL PROBLEM

According to the oil separation device disclosed in Patent Literature 1, if a large amount of oil mist has to be separated, oil that has been once captured may exceed a permissible level of oil adsorption of the fiber fabric (oil adsorption layer) and rescatter in the blow-by gas. In order to address such a problem, it has been intended to increase a thickness of an oil adsorption layer, for example. In this, however, the increase in thickness of the oil adsorption layer results in increase in cost for the oil adsorption layer.

An object of the present invention is to provide a cyclone type oil separation device to suppress rescattering of oil that has been once captured from blow-by gas while achieving reduction in cost for an oil adsorption layer.

### SOLUTION TO PROBLEM

A first characteristic feature of a cyclone type oil separation device according to the present invention lies in including a main body, a gas introduction part mounted on a side wall of the main body for introducing oil-mixed gas into an interior of the main body, a gas discharge part mounted on an upper wall of the main body for discharging gas of the oil-mixed gas from which oil is separated to the outside of the main body, an oil catcher provided in an inner surface of the main body, and a space defined between the oil catcher and the inner surface, through which the captured oil flows down.

With such an arrangement in which the oil catcher is provided in the inner surface of the main body, the oil that has been centrifuged from the oil-mixed gas in the main body can be captured by the oil catcher to allow oil components to be reliably separated from the oil-mixed gas.

Further, the space is defined between the oil catcher and the inner surface of the main body, through which space the captured oil flows down, and thus the oil captured by the oil catcher can be discharged to the space defined between the oil catcher and the inner surface of the main body. As a result, the captured oil is allowed to flow down through the space between the oil catcher and the inner surface of the main body, thereby to separate the oil from the oil-mixed gas efficiently. In addition, since the oil captured by the oil catcher flows down through a back surface side of the oil catcher (space between the oil catcher and the inner surface of the main body), it is suppressed that the oil that has been once captured by the oil catcher is disadvantageously rescattered in the oil-mixed gas from the surface side of the oil catcher (inner side of the main body).

A second characteristic feature of the cyclone type oil separation device according to the present invention lies in that the oil catcher is provided at least in a region of the inner surface of the main body defined at the same level of the gas introduction part.

The region of the inner surface of the main body defined at the same level of the gas introduction part is a region where the oil-mixed gas is introduced from the gas introduction part and thus flows fastest. Therefore, by providing the oil catcher at least in the region of the inner surface of the main body defined at the same level of the gas introduction part as described above, the oil-mixed gas that flows fast would collide against the oil catcher. As a result, the oil in the oil-mixed gas can be efficiently captured by the oil catcher.

A third characteristic feature of the cyclone type oil separation device according to the present invention lies in that the oil catcher is provided to extend from an upper region defined at the same level of the gas introduction part including a region defined at the same level of the gas introduction part to a lower region including a region having an oil discharge part from which oil is discharged.

If the oil catcher is provided to extend only over the region of the inner surface of the main body defined at the same level of the gas introduction part, a region lower than that region has no oil catcher. Thus, the oil flowing down through the space defined between the inner surface of the main body and the oil catcher is forced to come into direct contact with the oil-mixed gas. As a result, the oil that has been once captured might be rescattered in the oil-mixed gas in the lower region.

In the meantime, as described above, when the oil catcher is provided to extend from the upper region defined at the same level of the gas introduction part including the region defined at the same level of the gas introduction part to the lower region including the region having the oil discharge part from which oil is discharged, the captured oil flows down through the space defined between the inner surface of the main body and the oil catcher to the lower region in the vicinity of the oil discharge part. As a result, it is suppressed that the oil that has been once captured from the surface side of the oil catcher (inner side of the main body) is disadvantageously rescattered in the oil-mixed gas.

A fourth characteristic feature of the cyclone type oil separation device according to the present invention lies in that the oil catcher is made of a porous material.

When the oil catcher is made of a porous material, fine oil mist can be adsorbed by the oil catcher by adjusting the density, voids per area or the like. This can enhance separability of oil from the oil-mixed gas.

### BRIEF DESCRIPTION OF DRAWINGS

Fig. 1 is a side view of an oil separation device according to a first embodiment;
Fig. 2 is a sectional view from arrows II - II in Fig. 1; and
Fig. 3 is a side view of an oil separation device according to a second embodiment.

### DESCRIPTION OF EMBODIMENTS

A cyclone type oil separation device according to the present invention will be described hereinafter in reference to the accompanying drawings.

The cyclone type oil separation device 1 (also referred to simply as "oil separation device" hereinafter) is used for separating oil from oil-mixed gas (blow-by gas) generated within a crankcase of a vehicle engine, for example, and returning the separated oil to the crankcase. The oil separation device 1 may be used for separating oil from oil-mixed gas generated in an interior of an internal combustion engine other than the vehicle engine.

### [First Embodiment]

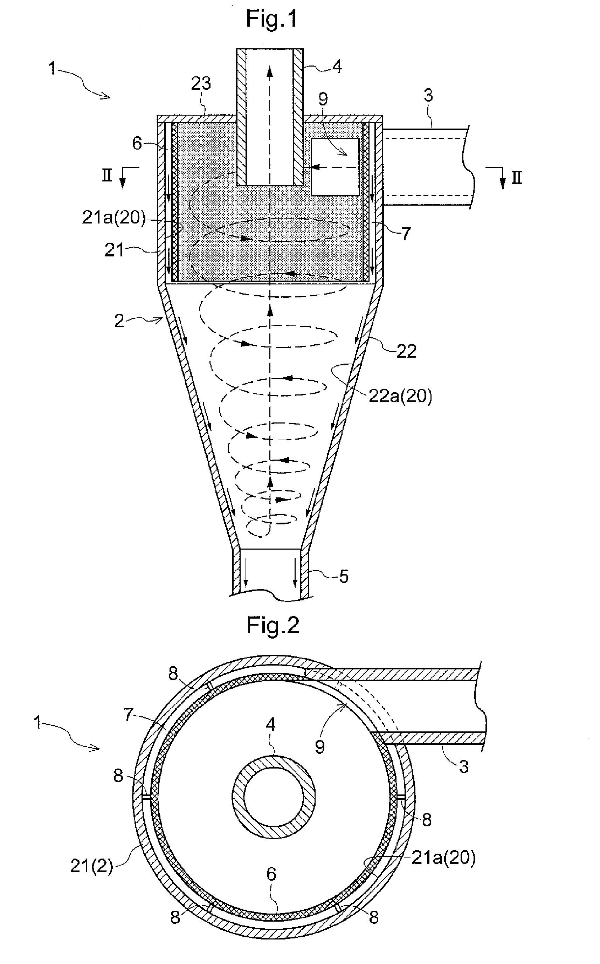

Referring to Fig. 1, the oil separation device 1 includes a main body 2, a gas introduction part 3, a gas discharge part 4, and an oil discharge part 5.

The main body 2 is provided with a cylindrical part 21, and a conical part 22 continued from a lower end of the cylindrical part 21 with its diameter being progressively decreased downward. A top plate 23 is provided at an upper end of the cylindrical part 21. An opening is formed in a lower end of the conical part 22 to act as the oil discharge part 5.

The gas introduction part 3 is tubular and arranged in the vicinity of the upper end of the cylindrical part 21 to be connected in a tangential direction of an inner circumferential surface of the cylindrical part 21. The oil-mixed gas is introduced to the interior of the main body 2 through the gas instruction part 3.

The gas discharge part 4 is also tubular and inserted into around a middle portion of the top plate 23. The gas discharge part 4 has a lower end positioned within the main body 2 and in the vicinity of a lower end of the gas introduction part 3, and an upper end positioned above the main body 2. Gas of the oil-mixed gas from which oil is separated is discharged from the gas discharge part 4.

An oil catcher 6 is provided in an inner surface 21 a of the cylindrical part 21 of an inner surface 20 of the main body 2 to define a space 7 between the substantially entire inner surface 21 a and the oil catcher 6. The oil catcher 6 is formed of a material for adsorbing and discharging oil to the space 7 defined between the inner surface 20 (inner surface 21 a) and the oil catcher 6. The oil catcher 6 may use fiber assemblies such as unwoven fabrics and woven fabrics, porous structures or reticulated structures made of metal, resin or ceramics, sponges, and the like. The oil catcher 6 is preferably made of a porous material having good oil adsorbability. The captured oil flows down through the space 7 defined between the oil catcher 6 and the inner surface 20 (inner surface 21 a). The oil catcher 6 has an opening 9 for introducing the oil-mixed gas from the gas introduction part 3 to the interior of the main body 2.

Referring to Fig. 2, the oil catcher 6 is provided with a plurality of projections 8 to be opposed to the inner surface 20 (inner surface 21 a) of the oil catcher 6. By adhering the projections 8 to the inner surface 21a, the space 7 is defined between the inner surface 20 (inner surface 21 a) and the oil catcher 6. In order to form the space 7 between the inner surface 21 a and the oil catcher 6, the projections may be provided on the inner surface 20 (inner surface 21 a) or on both the oil catcher 6 and the inner surface 21a. The oil catcher 6 may be maintained on the inner surface 21a by engagement or friction, instead of adhesion. The projections 8 provided on the oil catcher 6 may be made of the same material as the oil catcher 6 or may be made of any other material as long as it is connectable to the oil catcher 6.

The oil-mixed gas generated within an unillustrated crankcase flows into the cylindrical part 21 of the main body 2 through the gas introduction part 3 and makes rotating movement within the main body 2. The rotating movement of the oil-mixed gas produces a centrifugal force in the oil-mixed gas, as a result of which oil (mist) collides against the inner surface 21 a of the cylindrical part 21. Since the oil catcher 6 is provided in the inner surface 21 a, the oil mist is adsorbed to the oil catcher 6.

The oil that has been captured by the oil catcher 6 is temporarily retained within the oil catcher 6. When an oil amount retained in the oil catcher 6 exceeds a predetermined level, the oil which overflows the oil catcher 6 is discharged into the space 7 defined between the inner surface 21 a and the oil catcher 6. The oil discharged into the space 7 flows down to the oil discharge part 5 and is discharged through the oil discharge part 5 to the outside of the main body 2 and then returned to the unillustrated crankcase.

With such an arrangement in which the oil catcher 6 is mounted in the inner surface 20 (inner surface 21 a) of the main body 2, the oil that has been centrifuged from the oil-mixed gas in the main body 2 can be captured by the oil catcher 6, thereby to ensure that oil components can be separated from the oil-mixed gas.

Further, the space 7 defined between the oil catcher 6 and the inner surface 20 (inner surface 21a) of the main body 2 allows the captured oil to flow down through the space 7, thereby to separate the oil from the oil-mixed gas efficiently. In addition, it is suppressed that the oil that has been once captured by the oil catcher 6 is disadvantageously rescattered in the oil-mixed gas from the surface side of the oil catcher 6 (inner side of the main body 2).

### [Second Embodiment]

When the oil catcher 6 is provided to extend only over an upper region (inner surface 21 a of the cylindrical part 21) including a region of the inner surface 20 of the main body 2 defined at the same level of the gas introduction part 3, a lower region (inner surface 22a of the conical part 22) has no oil catcher 6. Thus, the oil flowing down through the space 7 is forced to come into direct contact with the oil-mixed gas in the lower region (inner surface 22a of the conical part 22), as a result of which the captured oil might be rescattered in the oil-mixed gas.

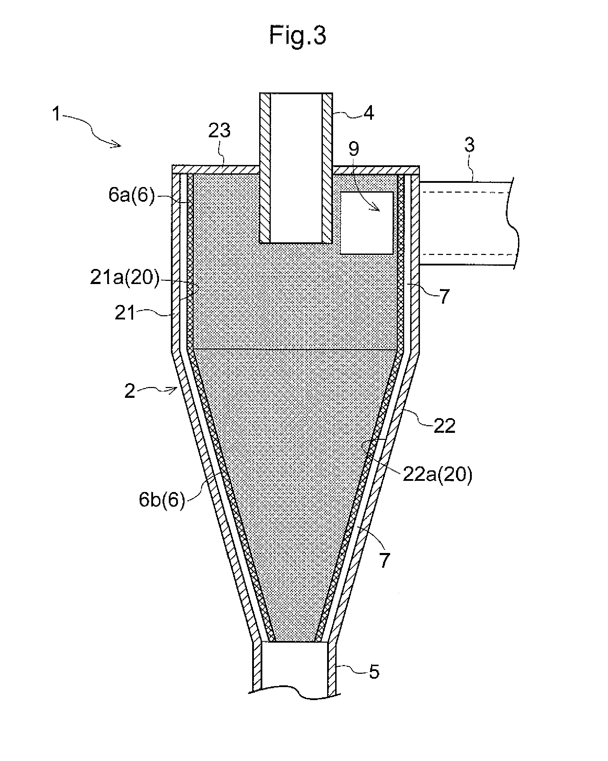

In view of the above, according to the current embodiment, the oil catcher 6 is provided over, in addition to the upper region including the region defined at the same level of the gas introduction part 3 of the main body 2, the lower region extending from the upper region to the oil discharge part 5, as shown in Fig. 3. More particularly, the oil catcher 6 is formed as an integral unit of an upper oil catcher 6a disposed in the inner surface 21 a of the cylindrical part 21 and a lower oil catcher 6b disposed in the inner surface 22a of the conical part 22.

With such an arrangement in which the oil catcher 6 is provided to extend from the gas instruction part 3 to the oil discharge part 5, the captured oil flows down without being exposed to the inner space of the main body 2. This can prevent the oil from disadvantageously rescattering to the oil-mixed gas from the surface side of the oil catcher 6 (inner side of the main body 2).

### [Other Embodiments]

(1) In the above embodiments, the main body 2 is a combination of the cylindrical part 21 and the conical part 22. Instead, the main body 2 may be formed as a conical element with its diameter being progressively decreased downward.
(2) In the second embodiment described above, the upper oil catcher 6a is formed integrally with the lower oil catcher 6b as a one-piece unit. Instead, the upper oil catcher 6a may be separated from the lower oil catcher 6b. With such a construction, it is possible to easily arrange the oil catchers that are different from each other in material or thickness in the upper and lower regions of the main body 2, as a result of which an optimal oil catcher can be arranged in each region of the main body 2.

### INDUSTRIAL APPLICABILITY

The oil separation device according to the present invention is widely applicable to gas-liquid separation.

### REFERENCE SIGNS LIST

- 1: oil separation device
- 2: main body
- 3: gas introduction part
- 4: gas discharge part
- 5: oil discharge part
- 6: oil catcher
- 7: space
- 8: projection
- 20: inner surface
- 21: cylindrical part
- 21a: inner surface of cylindrical part (upper region)
- 22: conical part
- 22a: inner surface of conical part (lower region)

## Claims

1. A cyclone type oil separation device comprising:
a main body;
a gas introduction part mounted on a side wall of the main body for introducing oil-mixed gas into an interior of the main body;
a gas discharge part mounted on an upper wall of the main body for discharging gas of the oil-mixed gas from which oil is separated to the outside of the main body;
an oil catcher provided in an inner surface of the main body; and
a space defined between the oil catcher and the inner surface, through which the captured oil flows down.

2. The cyclone type oil separation device according to claim 1, wherein the oil catcher is provided at least in a region of the inner surface of the main body defined at the same level of the gas introduction part.

3. The cyclone type oil separation device according to claim 1, wherein the oil catcher is provided to extend from an upper region defined at the same level of the gas introduction part including a region defined at the same level of the gas introduction part to a lower region including a region having an oil discharge part from which oil is discharged.

4. The cyclone type oil separation device according to any one of claims 1 to 3, wherein the oil catcher is made of a porous material.
